# EUROPÄISCHE PATENTSCHRIFT

(11) **EP 0 636 076 B1**
(45) Veröffentlichungstag und Bekanntmachung des Hinweises auf die Patenterteilung: **28.02.1996**
(21) Anmeldenummer: 93908868.8
(22) Anmeldetag: 01.04.1993
(51) Int. Cl.: B60S 1/34

(54) **WISCHARM FÜR SCHEIBENWISCHER VON KRAFTFAHRZEUGEN**
MOTOR VEHICLE WINDSHIELD WIPER ARM
BRAS D'ESSUIE-GLACE DE VEHICULES A MOTEUR

(30) Priorität: 04.04.1992 DE 4211326
(43) Veröffentlichungstag der Anmeldung: 01.02.1995
(73) Patentinhaber: ITT Automotive Europe GmbH, D-60488 Frankfurt am Main (DE)
(72) Erfinder: BAUER, Kurt, D-7121 Ingersheim 2 (DE); SCHMID, Eckhardt, D-7129 Brackenheim (DE)
(86) Internationale Anmeldenummer: EP9300790
(87) Internationale Veröffentlichungsnummer: WO9319956

(56) Entgegenhaltungen:
- EP-A- 0 369 672
- DE-A- 3 909 165
- FR-A- 2 517 609
- FR-A- 2 648 414

## Beschreibung

Die Erfindung bezieht sich auf einen Wischarm mit einem Gelenkteil zur schwenkbaren Anlenkung an einem Anschlußkopf eines Scheibenwischerantriebs eines Kraftfahrzeugs und mit einer am Gelenkteil gehaltenen Wischstange, wobei das Gelenkteil im wesentlichen einen etwa U-förmigen Querschnitt aufweist. Unmittelbar an der Lagerachse des Anschlußkopfes entfällt üblicherweise ein Stück des U-Mittelstegs und im Bereich des festgehaltenen Wischstangenendes wird normalerweise von der U-Form ebenfalls abgewichen, weswegen von einem "im wesentlichen" U-förmigen Querschnitt gesprochen wird.

Solche Wischarme sind in den verschiedensten Ausführungen bekannt. Gemäß beispielsweise der FR-A 2 517 609 wird der Anschlußkopf drehfest mit der Antriebswelle des Scheibenwischerantriebs verbunden, die sich unterhalb der Frontscheibe des Kraftfahrzeugs befindet und über einen bekannten Mechanismus hin und her gedreht wird. Damit man den Scheibenwischer von der Scheibe abheben kann, ist das Gelenkteil um die erwähnte, etwa senkrecht zur Wischerantriebswelle verlaufende Lagerachse verschwenkbar am Anschlußkopf gelagert. Eine Zugfeder kann das Wischerblatt fest gegen die Scheibe ziehen (siehe z.B. FR-A-2 648 414).

Um den richtigen Kontaktdruck des Wischers an der Windschutzscheibe und dessen korrekte Ausrichtung gegenüber der Scheibenfläche zu gewährleisten, muß der Wischblatthalter gegenüber der Scheibenoberfläche, die bei jedem Fahrzeug unterschiedlich verlaufen kann, ausgerichtet werden. Es wird eine senkrechte Stellung des Wischblatts zur Scheibenoberfläche angestrebt.

Dies erreicht man beispielsweise dadurch, daß man die Wischstange um den notwendigen Winkel verschränkt (siehe z.B. DE-A-3 909 165). Wenn der Verdrehbereich kurz ist, so sieht dies optisch unschön aus und wird von den Kraftfahrzeug-Designern in der Regel nicht akzeptiert. Wählt man hingegen einen langen Verdrehbereich, der optisch nicht so störend ist, so lassen sich die Wischstangen auf einem entsprechenden Automaten nicht befriedigend herstellen, weil sie unterschiedlich elastisch rückfedern. Nach dem Lackieren müssen sie oftmals noch gerichtet werden, da beim Einbrennen Spannungen freigesetzt werden können.

Die erwähnte FR-A 2 517 609 schlägt demgegenüber vor, die Schränkung gewissermaßen in den Anschlußkopf zu verlegen, um dadurch eine ungeschränkte Wischstange verwenden zu können. Auch diese Variante stößt vielfach auf optische Bedenken und ist aus Platzgründen nicht überall möglich. Es kommen auch noch die damit verbundenen Herstellungskosten als weiterer Nachteil hinzu.

Demnach liegt die Aufgabe vor, einen Wischarm der eingangs beschriebenen Art so weiterzubilden, daß er mit der notwendigen schränkung versehen werden kann, ohne hinsichtlich der Herstellungskosten und des optisch schönen Aussehens Nachteile in Kauf nehmen zu müssen.

Zur Lösung dieser Aufgabe wird erfindungsgemäß vorgeschlagen, daß der Wischarm gemäß dem Oberbegriff des Anspruchs 1 entsprechend dem kennzeichnenden Teil dieses Anspruchs ausgebildet ist.

Bei diesem Wischarm kann ein herkömmlicher, ungeschränkter Anschlußkopf verwendet werden. Des weiteren kann man auf eine Schränkung der Wischstange verzichten. Trotzdem wird der nötige Schränkwinkel erreicht, weil die Schränkung erfindungsgemäß in das Gelenkteil verlagert wurde. Dieses ist in der Regel lange genug, um bei den üblichen Schränkungswinkeln eine sanfte Schränkung zu gewährleisten, die optisch kaum wahrnehmbar ist. Die Herstellung dieses Gelenkteils ist nicht schwieriger als die eines herkömmlichen. Dasselbe gilt für die Montage und Zugänglichkeit. Selbstverständlich verläuft die Schränkung dieses Gelenkteils absatzlos, also stetig vom einen zum anderen Ende hin. Es kann in üblicher Weise aus ebenem Blech hergestellt werden und auch die Befestigung der Wischstange ist in bekannter Weise möglich. Dasselbe gilt für die Schwenkverbindung mit dem Anschlußkopf.

Der Schränkungswinkel des Gelenkteils beträgt vorzugsweise etwa 15°. Man erreicht dadurch bei den heute üblichen Frontscheiben der Kraftfahrzeuge die korrekte Ausrichtung des Wischerblatts gegenüber der Scheibenoberfläche.

Eine weitere Ausgestaltung der Erfindung kennzeichnet sich dadurch, daß der Seitenabstand der seitlichen Schenkel des Gelenkteils am wischstangenseitigen Ende geringer ist als der Seitenabstand der seitlichen Schenkel am anschlußkopfseitigen Ende, d.h. dieses Gelenkteil verjüngt sich vom Anschlußkopf zur Wischstange hin.

Ein besonders bevorzugte Ausführungsform der Erfindung ist dadurch gekennzeichnet, daß die beiden seitlichen Schenkel am wischstangenseitigen Ende des Gelenkteils zum wenigstens teilweise umschließenden Festhalten des zugeordneten Wischstangenendes gegeneinander hin umgebogen sind. Das lose Gelenkteil hat zunächst einen U-förmigen Querschnitt über quasi seine gesamte Länge. Nach dem Einlegen der Wischstange in das wischstangenseitige Ende des Gelenkteils werden dessen U-Schenkel gegeneinander hin umgebogen und dadurch das Festhalten der Wischstange am Gelenkteil erreicht. Vorzugsweise erfolgt dabei die Ausbildung gemäß Anspruch 5. Demgemäß verjüngt sich das Gelenkteil nicht nur zur Wischstange hin, vielmehr reduziert sich auch, über die Länge gesehen, seine Höhe vom Anschlußkopf bis zur Wischstange.

Eine Weiterbildung der Erfindung ist dadurch gekennzeichnet, daß die seitlichen Schenkel an der wischstangenseitigen Stirnkante des Gelenkteils vor dem Umbiegen mit dem Mittelsteg jeweils einen gleichen Winkel von vorzugsweise etwas mehr als 90° einschließen. Letzteres ermöglicht das leichte Einlegen der Wischstange vor dem Umbiegen der freien Schenkel-Enden am wischstangenseitigen Gelenkteilende.

Eine andere Variante der Erfindung ist im Anspruch 7 beschrieben. Auf welchen dieser beiden Vorschläge man jeweils zurückgreift, hängt von der Größe des Gelenkteils, dem verwendeten Material und gegebenenfalls auch einer automatischen Fertigung ab. Auch die Ausbildung des Werkzeugs kann dabei eine bestimmende Rolle spielen.

Weitere vorteilhafte Ausbildungen der Erfindung ergeben sich aus den Unteransprüchen sowie der nachfolgenden Beschreibung zweier Ausführungsbeispiele.

Die Zeichnung zeigt diese Ausführungsbeispiele der Erfindung. Hierbei stellen dar:
- Figur 1: eine perspektivische Ansicht des Gelenkteils,
- Figur 2: eine Ansicht des Gelenkteils der Figur 1 in Pfeilrichtung A gesehen,
- Figur 3: eine der Figur 2 entsprechende Darstellung eines zweiten Ausführungsbeispiels der Erfindung,
- Figur 4: das Gelenkteil der Figur 2 bzw. Figur 3 bei anmontierter Wischstange.

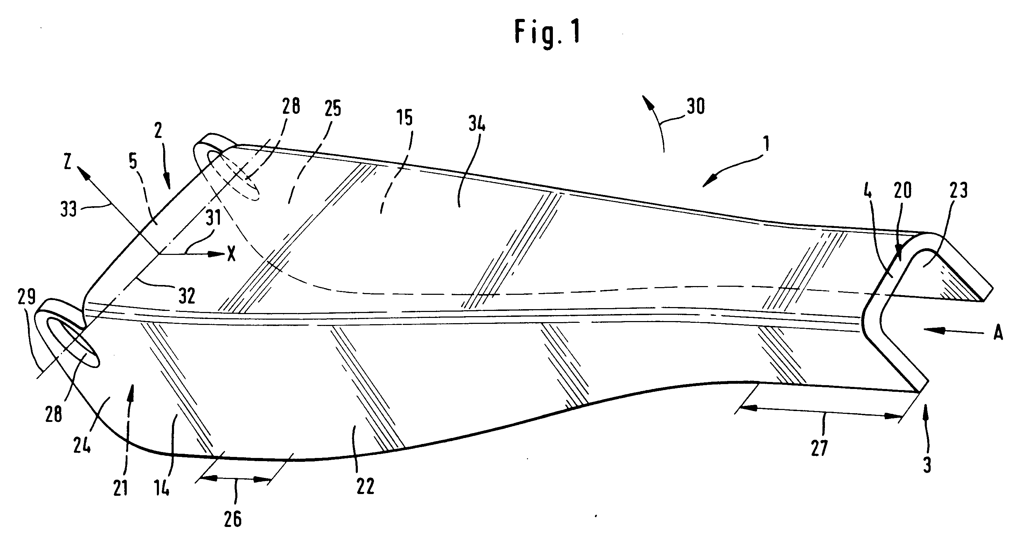

Das Gelenkteil 1 hat in losem Zustand also vor seiner Verbindung mit einer Wischstange gemäß Figur 1 die Gestalt einer U-Schiene, wobei das anschlußkopfseitige Ende 2 breiter und höher ist als das wischstangenseitige Ende.

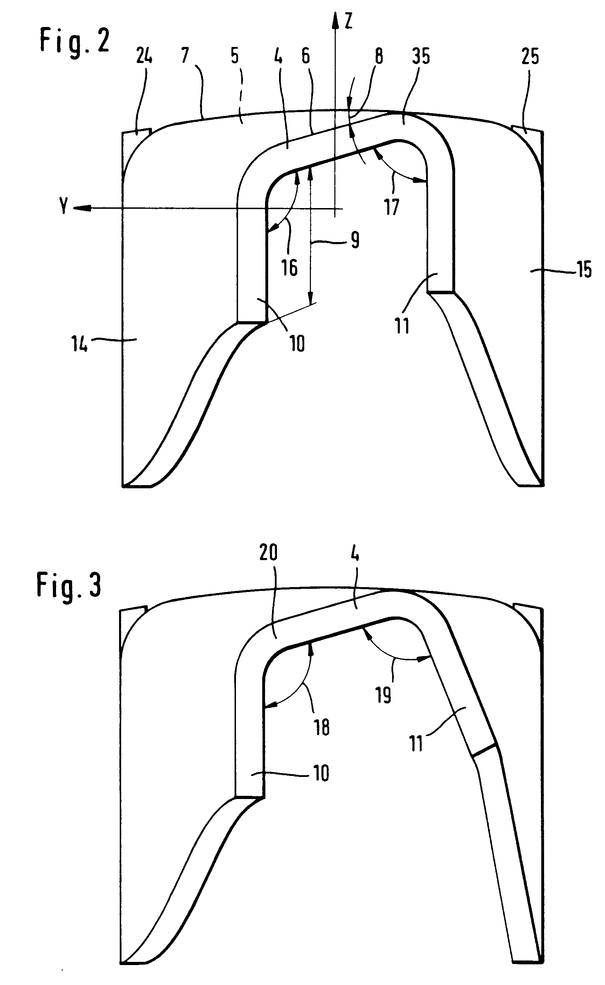

Den Figuren 2 bis 4 entnimmt man aber, daß der Mittelsteg 4 des wischstangenseitigen Endes 3 geneigt zum Mittelsteg 5 des anschlußkopfseitigen Endes 2 verläuft, so daß die oberen Begrenzungskanten 6 und 7 bei einer Projektion in eine Y-Z-Ebene einen spitzen Winkel 8 bilden. Bei den üblichen Schrägstellungen des Wischerblatthalters und auch des Wischerblatts liegt dieser Winkel 8 in der Größenordnung von 15°.

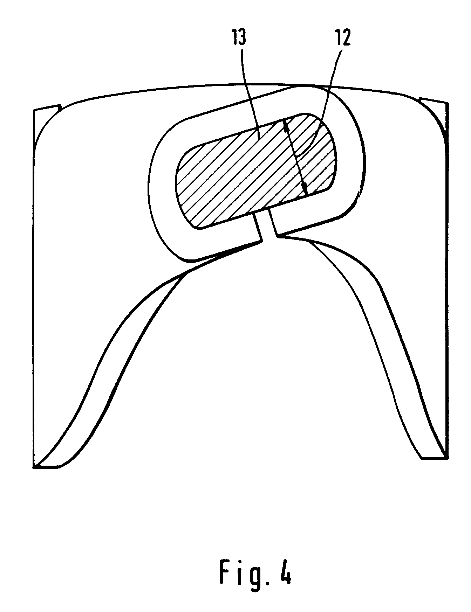

Aus den Figuren 2 und 4 entnimmt man, daß die Länge 9 der seitlichen Schenkel 10 und 11 am wischstangenseitigen Ende 3 des Gelenkteils 1 die Dicke 12 der Wischstange 13 übertrifft.

Beispielsweise aus Figur 2 ergibt sich, daß die seitlichen Schenkel 14 und 15 am anschlußkopfseitigen Stirnende einen größeren Seitenabstand haben als die seitlichen Schenkel 10 und 11 am wischerstangenseitigen Ende 3 des Gelenkteils 1. Außerdem sind die Schenkel 14 und 15 länger, vorzugsweise etwa doppelt so lang, wie die seitlichen Schenkel 10 und 11. Beim Ausführungsbeispiel der Figur 2 verlaufen die seitlichen Schenkel 10 und 11 am wischerstangenseitigen Ende 3 parallel zueinander, weswegen sie mit dem schrägverlaufenden Mittelsteg 4 unterschiedliche Winkel 16 und 17 bilden, Demgegenüber sind die Winkel 18 und 19, welche die seitlichen Schenkel 10 und 11 am wischstangenseitigen Ende 3 des Gelenkteils 1 beim Ausführungsbeispiel nach Figur 3 mit dem zugeordneten Mittelsteg 4 einschließen, zumindest in etwa gleich. Trotzdem erreicht man bei beiden Ausführungsformen letztendlich die sich aus Figur 4 ergebende Gestalt des eingebauten Gelenkteils 1. Andererseits hat dies aber zur Folge, daß die seitlichen Schenkel 10 und 11 des Ausführungsbeispiels der Figur 2 parallel zueinander und auch parallel zu den seitlichen Schenkeln 14 und 15 am anschlußkopfseitigen Ende des Gelenkteils 1 verlaufen, während die beiden seitlichen Schenkel 10 und 11 bei der zweiten Variante der Erfindung gemäß Figur 3 einen spitzen Winkel miteinander bilden.

Bei beiden Ausführungsformen verläuft die wischstangenseitige Stirnkante 18 parallel zu einem anschlußkopfseitigen Querschnitt 21. Die Seitenflanken 22 und 23 des Gelenkteils 1 sind in Figur 1 über diesen gedachten Querschnitt 21 hinaus verlängert, wodurch Lagerlappen 24 und 25 entstehen. Demnach bildet also lediglich der Quersteg des gedachten anschlußkopfseitigen Querschnitts 21 eine körperliche Kante und diese entspricht dem erwähnten Mittelsteg 5 am anschlußkopfseitigen Ende 2 des Gelenkteils 1. Über einen Bereich 26 bzw. 27 verlaufen die Seitenflanken 22 und 23 des Gelenkteils 1 parallel zueinander und zwischen diesen Bereichen befindet sich der sich verengende und in der Höhe verkürzende Zwischenteil. Jeder der beiden Lagerlappen 24 und 25 ist mit einer Lagerbohrung 28 versehen. Durch diese beiden Lagerbohrungen 28 ist auch die geometrische Lagerachse 29 des Gelenkteils 1 definiert. Um diese Lagerachse 29 kann das Gelenkteil 1 im Sinne des Pfeils 30 verschwenkt werden, um den nicht gezeigten Wischblatthalter mit dem Wischblatt von der Scheibe des Kraftfahrzeugs abzuheben.

In Figur 1 ist ein Koordinatensystem mit den Koordinatenachsen 31, 32 und 33 eingezeichnet, wobei die Y-Z-Ebene durch die Stirnkante des Mittelstegs 5 am anschlußkopfseitigen Ende 2 des Gelenkteils 1 gelegt ist. Die X-Achse 31 versinnbildlicht gewissermaßen eine Längsachse des Gelenkteils 1. Man erkennt beispielsweise aus Figur 2, daß die beiden seitlichen Schenkel 14 und 15 von einer gedachten X-Z-Ebene einen gleichen Seitenabstand haben. Dies bleibt im wesentlichen bis hin zum wischstangenseitigen Ende 3 erhalten. Beim Ausführungsbeispiel ist allerdings, wie die Figur 2 ohne weiteres erkennen läßt, der rechte seitliche Schenkel 11 von dieser X-Z-Ebene seitlich etwas weiter entfernt als der linke seitliche Schenkel 10. Dies hängt jedoch mit der Erfindung nicht zusammen, sondern stellt eine Besonderheit dieses Gelenkteils dar. Dasselbe gilt im Grunde genommen auch für die Abmessungen der einzelnen Bestandteile des Gelenkteils 1.

Aus dem Vorstehenden folgt auch, daß die obere Wand 34 des Gelenkteils 1, welche gemäß den vorstehenden Darlegungen und in Übereinstimmung mit den Figuren 2 und 3 eine räumlich gekrümmte oder verschränkte Fläche darstellt, am anschlußkopfseitigen Ende 2 des Gelenkteils 1 rechtwinklig zu den beiden seitlichen Schenkeln 14 und 15 verläuft, und dieser Verlauf kann sich beispielsweise über die Länge des Bereichs 26 erstrecken. Falls ein solcher ebener Teilbereich der Wand 34 vorgesehen ist, erfolgt der Übergang in den schräg geneigten, wesentlich längeren Wandteil selbstverständlich absatzlos.

Aus den Figuren 2 und 3 erkennt man des weiteren, daß der im Gebrauch höhere Eckbereich 35 in der Projektion vorzugsweise bündig mit dem Mittelsteg 5 des anschlußkopfseitigen Endes 2 verläuft.

## Patentansprüche

1. Wischarm mit einem Gelenkteil (1) zur schwenkbaren Anlenkung an einem Anschlußkopf eines Scheibenwischerantriebs eines Kraftfahrzeugs und mit einer am Gelenkteil gehaltenen Wischstange (13), wobei das Gelenkteil (1) im wesentlichen einen etwa U-förmigen Querschnitt aufweist, dadurch gekennzeichnet, daß das Gelenkteil (1) derart geschränkt ist, daß der Mittelsteg (4) des wischstangenseitigen Gelenkteilendes (3) gegenüber dem anschlußkopfseitigen Gelenkteilende (2) um einen spitzen Winkel (8) geneigt verläuft.

2. Wischarm nach Anspruch 1, dadurch gekennzeichnet, daß der Schränkungswinkel des Gelenkteils (1) etwa 15° beträgt.

3. Wischarm nach Anspruch 1 oder 2, dadurch gekennzeichnet, daß der Seitenabstand der seitlichen Schenkel (10, 11) des Gelenkteils (1) am wischstangenseitigen Ende geringer ist als der Seitenabstand der seitlichen Schenkel (14, 15) am anschlußkopfseitigen Ende.

4. Wischarm nach wenigstens einem der vorhergehenden Ansprüche, dadurch gekennzeichnet, daß die beiden seitlichen Schenkel am wischstangenseitigen Ende des Gelenkteils (1) zum wenigstens teilweise umschließenden Festhalten des zugeordneten Wischstangenendes gegeneinander hin umgebogen sind.

5. Wischarm nach Anspruch 4, dadurch gekennzeichnet, daß das wischstangenseitige Ende (3) des Gelenkteils (1) die in Gebrauchslage von der Scheibe wegweisende Fläche des Wischstangenendes (13) von oben her umfaßt und einen C-förmigen oder etwa O-förmigen Querschnitt aufweist, wobei die seitlichen Schenkel (10, 11) des losen Gelenkteils (1) am anschlußkopfseitigen Ende (2) vorzugsweise etwa doppelt so lang sind wie am wischstangenseitigen Gelenkteilende (3).

6. Wischarm nach Anspruch 4 oder 5, dadurch gekennzeichnet, daß die seitlichen Schenkel (10, 11) an der wischstangenseitigen Stirnkante (20) des Gelenkteils (1) vor dem Umbiegen mit dem Mittelsteg (4) jeweils einen gleichen Winkel (18, 19) von vorzugsweise etwas mehr als 90° einschließen.

7. Wischarm nach Anspruch 4 oder 5, dadurch gekennzeichnet, daß die seitlichen Schenkel (10, 11) an der wischstangenseitigen Stirnkante (20) des Gelenkteils (1) vor dem Umbiegen parallel zu den seitlichen Schenkeln (14, 15) am anschlußkopfseitigen Ende (2) verlaufen und die anschlußkopfseitigen seitlichen Schenkel (14, 15) etwa rechtwinklig zu ihrem Mittelsteg (5) angeordnet sind.

8. Wischarm nach wenigstens einem der vorhergehenden Ansprüche, dadurch gekennzeichnet, daß die Ebenen der wischstangenseitigen Stirnkante (20) und der anschlußkopfseitigen Stirnkante bzw. eines anschlußkopfseitigen Querschnitts (21) des Gelenkteils (1) etwa parallel zueinander angeordnet sind, wobei die anschlußkopfseitige Stirnkante bzw. der Querschnitt (21) in einer gedachten Y-Z-Ebene verläuft, und daß senkrecht zu dieser Y-Z-Ebene gesehen der im Gebrauch höhere Eckbereich (35) der wischstangenseitigen Stirnkante (20) etwa bündig mit der anschlußkopfseitigen Stirnkante des Mittelstegs (5) verläuft.

9. Wischarm nach Anspruch 8, dadurch gekennzeichnet, daß die beiden seitlichen Schenkel (10, 11) der beiden Stirnkanten (20, 21) des Gelenkteils (1) annähernd spiegelbildlich zu einer gedachten X-Z-Ebene angeordnet sind.

10. Wischarm nach Anspruch 8 oder 9, dadurch gekennzeichnet, daß ein Lagerlappen (24, 25) am anschlußkopfseitigen Ende (2) jeder Seitenflanke (22, 23) des Gelenkteils (1) oben etwa bündig mit der oberen Wand (34) des Gelenkteils (1) abschließt.

## Claims

1. A wiper arm including an arm head (1) to swivellably articulate it to a connecting head of a wiper drive of an automotive vehicle, and a wiper rod (13) retained at the arm head, the arm head (1) having a substantially U-shaped cross-section,
**characterized** in that the arm head (1) is bent such that the cross bar (4) of the arm head end (3), close to the wiper rod, extends in relation to the arm head end (2), close to the connecting head, in a way inclined by an acute angle (8).

2. A wiper arm as claimed in claim 1,
**characterized** in that the bending angle of the arm head (1) amounts to 15° approximately.

3. A wiper arm as claimed in claim 1 or claim 2,
**characterized** in that the lateral distance of the lateral legs (10, 11) of the arm head (1) at the end close to the wiper rod is less than the lateral distance of the lateral legs (14, 15) at the end close to the connecting head.

4. A wiper arm as claimed in any one of the preceding claims,
**characterized** in that, at the end of the arm head (1) close to the wiper rod, the two lateral legs are deflected in relation to one another in order to enclose and retain the associated wiper rod end at least in part.

5. A wiper arm as claimed in claim 4,
**characterized** in that the end (3) of the arm head (1) close to the wiper rod embraces from above the surface of the wiper rod end (13), which is averted from the windshield in the position of use and has a C-shaped or roughly O-shaped cross-section, the lateral legs (10, 11) of the loose arm head (1) at the end (2) close to the connecting head, preferably, being about twice as long as they are at the arm head end (3) close to the wiper rod.

6. A wiper arm as claimed in claim 4 or claim 5,
**characterized** in that each of the lateral legs (10, 11) at the wiper-rod-side frontal edge (20) of the arm head (1), prior to the deflection, enclose with the cross bar (4) an identical angle (18, 19) of, preferably, somewhat more than 90°.

7. A wiper arm as claimed in claim 4 or claim 5,
**characterized** in that the lateral legs (10, 11) at the wiper-rod-side frontal edge (20) of the arm head (1), prior to the deflection, extend in parallel to the lateral legs (14, 15) at the end (2) close to the connecting head, and the lateral legs (14, 15) close to the connecting head are arranged roughly at right angles relative to its cross bar (5).

8. A wiper arm as claimed in at least one of the preceding claims,
**characterized** in that the planes of the frontal edge (20) close to the wiper rod and the frontal edge close to the connecting head or, respectively, a cross-section (21) of the arm head (1) close to the connecting head are arranged roughly in parallel to one another, the frontal edge close to the connecting head or, respectively, the cross-section (21) extending in an imaginary Y-Z plane, and in that, when viewed perpendicular to this Y-Z plane, the corner portion (35), which is higher in practical application, of the frontal edge (20) close to the wiper rod extends approximately flush with the cross bar (5) of the end close to the connecting head.

9. A wiper arm as claimed in claim 8,
**characterized** in that the two lateral legs (10, 11) of the two frontal edges (20, 21) of the arm head (1) are arranged roughly mirror-invertedly relative to an imaginary X-Z plane.

10. A wiper arm as claimed in claim 8 or claim 9,
**characterized** in that a mounting lug (24, 25) at the connecting-head-side end (2) of each side flank (22, 23) of the arm head (1) on the top ends approximately flush with the upper wall (34) of the arm head (1).

## Revendications

1. Bras d'essuie-glace comprenant une pièce d'articulation (1), servant à une articulation par basculement sur la tête de fixation d'une commande d'essuie-glace pour véhicule automobile, et une tige d'essuie-glace (13) maintenue sur la pièce d'articulation, cette pièce d'articulation (1) ayant dans l'ensemble une section transversale approximativement en U, caractérisé en ce que la pièce d'articulation (1) présente un gauchissement tel que la base (4) du U de l'extrémité (3) de la pièce d'articulation qui est située du côté de la tige d'essuie-glace est inclinée, en faisant un angle (8) aigu, vis-à-vis de l'extrémité (2) de la pièce d'articulation qui est située du côté de la tête de fixation.

2. Bras d'essuie-glace suivant la revendication 1, caractérisé en ce que l'angle de gauchissement de la pièce d'articulation (1) est égal à 15° environ.

3. Bras d'essuie-glace suivant la revendication 1 ou 2, caractérisé en ce que l'espacement transversal des branches latérales (10, 11) de la pièce d'articulation (1) à son extrémité située du côté de la tige d'essuie-glace est inférieur à l'espacement transversal des branches latérales (14, 15) à l'extrémité située du côté de la tête de fixation.

4. Bras d'essuie-glace suivant au moins l'une des revendications précédentes, caractérisé en ce que les deux branches latérales sont repliées l'une vers de l'autre à l'extrémité de la pièce d'articulation (1) qui est située du côté de la tige d'essuie-glace, afin d'immobiliser au moins partiellement l'extrémité associée de la tige d'essuie-glace en l'entourant.

5. Bras d'essuie-glace suivant la revendication 4, caractérisé en ce que l'extrémité de tige d'essuie-glace (3) de la pièce d'articulation (1) entoure de dessus la surface de l'extrémité (13) de la tige d'essuie-glace qui est située à l'opposé du pare-brise dans la position d'utilisation et en ce qu'elle présente une section transversale en C ou approximativement en O, les branches latérales (10, 11) de la pièce d'articulation (1) à l'état libre étant de préférence approximativement deux fois plus longues à l'extrémité de tête de fixation (2) qu'à l'extrémité de tige d'essuie-glace (3) de la pièce d'articulation.

6. Bras d'essuie-glace suivant la revendication 4 ou 5, caractérisé en ce qu'avant d'être repliées, les branches latérales (10, 11) font chacune avec la base (4) du U un angle identique (18, 19), de préférence légèrement supérieur à 90°, à l'endroit du bord frontal (20) de la pièce d'articulation (1) qui est situé du côté de la tige d'essuie-glace.

7. Bras d'essuie-glace suivant la revendication 4 ou 5, caractérisé en ce qu'avant d'être repliées, les branches latérales (10, 11) à l'endroit du bord frontal (20) de la pièce d'articulation (1) qui est situé du côté de la tige d'essuie-glace sont parallèles aux branches latérales (14, 15) à l'endroit de l'extrémité de tête de fixation (2) et ces branches latérales (14, 15) du côté de la tête de fixation sont approximativement perpendiculaires à la base (5) correspondante du U.

8. Bras d'essuie-glace suivant au moins l'une des revendications précédentes, caractérisé en ce que le plan du bord frontal (20) situé du côté de la tige d'essuie-glace et le plan du bord frontal situé du côté de la tête de fixation ou d'une section transversale (21) de la pièce d'articulation (1) qui est située du côté de la tête de fixation sont approximativement parallèles l'un à l'autre, ce bord frontal situé du côté de la tête de fixation ou cette section transversale (21) étant situé dans un plan Y-Z imaginaire, et en ce que, considéré perpendiculairement à ce plan Y-Z, la zone de coin (35), la plus haute en position d'utilisation, du bord frontal (20) situé du côté de la tige d'essuie-glace est disposée pratiquement suivant le même alignement que l'arête frontale de la base (5) du U qui est située du côté de la tête de fixation.

9. Bras d'essuie-glace suivant la revendication 8, caractérisé en ce que les deux branches latérales (10, 11) des deux bords frontaux (20, 21) de la pièce d'articulation (1) présentent approximativement une disposition symétrique vis-à-vis d'un plan X-Z imaginaire.

10. Bras d'essuie-glace suivant la revendication 8 ou 9, caractérisé en ce qu'une patte de montage basculant (24, 25) située à l'endroit de l'extrémité de tête de fixation (2) de chaque flanc latéral (22, 23) de la pièce d'articulation (1) se raccorde, à sa partie supérieure et pratiquement suivant le même alignement, à la paroi supérieure (34) de la pièce d'articulation (1).
